# EUROPÄISCHE PATENTSCHRIFT

(11) **EP 3 064 441 B1**
(45) Veröffentlichungstag und Bekanntmachung des Hinweises auf die Patenterteilung: **24.10.2018**
(21) Anmeldenummer: 16000274.7
(22) Anmeldetag: 04.02.2016
(51) Int. Cl.: B29L 31/00, B29K 23/00, B29C 49/08, B29C 49/42, B29C 49/46, B29C 49/64, B29C 49/78, B29K 101/12, B65B 65/00, B65B 3/02

(54) **MASCHINE ZUM HERSTELLEN UND BEFÜLLEN VON BEHÄLTERN**
MACHINE FOR THE PRODUCTION AND FILLING OF CONTAINERS
DISPOSITIF DE PRODUCTION ET DE REMPLISSAGE DE RECIPIENTS

(30) Priorität: 06.03.2015 DE 102015002795
(43) Veröffentlichungstag der Anmeldung: 07.09.2016
(73) Patentinhaber: KHS Corpoplast GmbH, 22145 Hamburg (DE)
(72) Erfinder: Herold, Thomas, 22941 Bargteheide (DE)
(74) Vertreter: Hausfeld, Norbert

(56) Entgegenhaltungen:
- EP-A1- 2 295 324
- WO-A2-02/38447

## Beschreibung

Die vorliegende Erfindung betrifft eine Maschine zum Herstellen und Befüllen von Behältern mit wenigstens einer Heizeinrichtung zum thermischen Konditionieren von Vorformlingen aus einem thermoplastischen Material, mit wenigstens einer Blaseinrichtung zum Umformen der thermisch konditionierten Vorformlinge zu jeweils einem Behälter mittels eines Blasprozesses oder eines Streckblasprozesses, mit wenigstens einer Fülleinrichtung zum Befüllen der Behälter mit einem Füllgut sowie mit einer Transfereinrichtung zum Fördern der Behälter von der Blaseinrichtung zu der Fülleinrichtung, wobei im Bereich der Transfereinrichtung wenigstens eine Düsenanordnung zum Beaufschlagen der Behälter mit einer kühlenden Flüssigkeit angeordnet ist.
Die Erfindung betrifft des Weiteren die Verwendung einer Düsenanordnung für eine derartige Maschine.

Dokument DE 60 2005 002 566 T2 offenbart ein Verfahren und eine Anlage zur Behälterherstellung wobei mittels zwei verschiedene Düsen (für Gas und Flüssigkeit) ein Gemisch von Gas und Flüssigkeit in Behälterbodenrichtung zugestreut wird. Bekannt sind Blasmaschinen mit Blasstationen zum Herstellen von Behältern aus Vorformlingen eines thermoplastischen Materials. Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.
Typischerweise weist eine derartige Blas- oder Streckblasmaschine eine einer Blasstation nachgeschaltet angeordnete Ausgabestrecke auf, die zur Ausgabe der fertig geblasenen Behälter ausgestaltet ist.
Alternativ ist auch bekannt, eine Blasmaschine synchronisiert mit einer Füllmaschine zu betreiben, wobei die fertigen Behälter über eine vergleichsweise kurze Transferstrecke von der Blasmaschine zur Füllmaschine übergeben werden. Oft wird eine derartige Konfiguration als Verblockung oder Blockmaschine bezeichnet. Bei einigen derartigen Anwendungen ist es erforderlich, die noch Restwärme aufweisenden Behälter entlang der Transferstrecke zu kühlen, um Beschädigungen und Deformationen während des anschließenden Füllens zu vermeiden. Dies ist beispielsweise häufig der Fall beim Abfüllen von kohlensäurehaltigen bzw. karbonisierten Getränken, bei denen die Behälter in der Regel unter Druck gesetzt werden, um während des Füllvorganges ein Aufschäumen des Getränks zu unterdrücken.

Eine gegebenenfalls erforderliche Behälterkühlung erfolgt in der Regel durch Flüssigkeit oder vernebelte Flüssigkeit. Bei einer Schwall- oder Strahlkühlung mit vergleichsweise großen Tropfen oder geschlossenen Flüssigkeitsstrahlen sind in der Regel vergleichsweise hohe Kühlleistungen erreichbar, wenn eine entsprechend große Menge an Flüssigkeit eingesetzt wird. Durch eine Vernebelung der Flüssigkeit lassen sich, abhängig von der Tropfengröße, auch mit geringeren Flüssigkeitsmengen moderate Kühlleistungen erzielen, die jedoch für ausgewählte Anwendungen nicht ausreichend sein können.

Zu diesem Zweck ist beispielsweise die Verwendung einer Einstoffdüse oder Einzeldüse bekannt, die vorteilhaft zur Schwall- oder Strahlkühlung eingesetzt werden können. Derartige Düsen sind jedoch nur bedingt zum Zerstäuben oder Vernebeln der Flüssigkeit geeignet, da hierfür Wasser unter relativ hohem Druck aus der Düse austreten und an der stehenden Luft vernebelt werden muss. Dabei besteht das Problem, dass die Funktionsfähigkeit einer solchen Anordnung stark abhängig ist von der Größe der Düsenöffnung und Verschmutzungen daher schnell zu Minderleistung oder Ausfall führen.

Ebenfalls ist die Verwendung von Zweistoffdüsen bekannt, bei der Wasser und Druckluft separat zugeführt und durch eine einzige, in der Regel konzentrische, Doppeldüse zu einem Kühlnebel zerstäubt werden. Die Funktionsweise derartiger Doppeldüsen zeigt eine deutliche Abhängigkeit von dem Verhältnis von Wasser- und Luftdruck, so dass für optimale Kühlergebnisse beide Mediendrücke sorgfältig eingestellt und kontrolliert oder erhöhte Verbräuche an Druckluft und Wasser in Kauf genommen werden müssen. Außerdem sind derartige Düsen in ihrem Durchsatz begrenzt und eignen sich daher nur eingeschränkt zur Schwall- oder Strahlkühlung.

Mit den bekannten Lösungen stellt sich insbesondere das Problem, dass eine Kühlstrecke im Voraus ausgelegt werden muss und dann nur noch sehr eingeschränkt in der Kühlleistung variiert werden kann.

Es ist eine Aufgabe der vorliegenden Erfindung, eine Alternative zu bekannten Lösungen anzugeben, wobei insbesondere eine robuste Funktionsweise und eine hohe Variabilität erreicht werden sollen.

Diese Aufgaben werden mit der Erfindung gelöst durch eine Maschine zum Herstellen und Befüllen von Behältern nach Anspruch 1 und durch Verwendung einer Düsenanordnung nach Anspruch 6. Bevorzugte Ausführungsformen der Erfindung ergeben sich aus den Unteransprüchen.

Die Maschine hat wenigstens eine Heizeinrichtung zum thermischen Konditionieren von Vorformlingen aus einem thermoplastischen Material, wenigstens eine Blaseinrichtung zum Umformen der thermisch konditionierten Vorformlinge zu jeweils einem Behälter mittels eines Blasprozesses oder eines Streckblasprozesses, wenigstens eine Fülleinrichtung zum Befüllen der Behälter mit einem Füllgut sowie eine Transfereinrichtung zum Fördern der Behälter von der Blaseinrichtung zu der Fülleinrichtung, wobei im Bereich der Transfereinrichtung wenigstens eine Düsenanordnung zum Beaufschlagen der Behälter, insbesondere von Bodenbereichen der Behälter, mit einem kühlenden Nebel angeordnet ist. In der erfindungsgemäßen Maschine weist die Düsenanordnung eine mittels einer Gasleitung mit einer Gasquelle verbundene Gasdüse sowie eine mittels einer Flüssigkeitsleitung mit einer Flüssigkeitsquelle verbundenen Flüssigkeitsdüse auf, wobei die Gasdüse und die Flüssigkeitsdüse derart zueinander angeordnet und ausgerichtet sind, dass ein Flüssigkeitsstrahl aus der Flüssigkeitsdüse einen Gasstrahl aus der Gasdüse in einem Kreuzungsbereich trifft.

Die erfindungsgemäße Maschine und die Düsenanordnung sind dabei relativ einfach aufgebaut, insbesondere sind sie einfach in der Konstruktion bereit zu stellen, und erlauben vorteilhafterweise eine relativ kostengünstige Herstellung und Wartung, sowie eine relativ einfache Handhabung, insbesondere Einstellung eines vorteilhaften Sprühnebels, insbesondere Sprühkegels.

Eine erfindungsgemäße Maschine weist eine mittels einer Gasleitung mit einer Gasquelle verbundene Gasdüse sowie eine mittels einer Flüssigkeitsleitung mit einer Flüssigkeitsquelle verbundene Flüssigkeitsdüse auf. Die Gasdüse und die Flüssigkeitsdüse sind derart zueinander angeordnet und ausgerichtet, dass ein Flüssigkeitsstrahl aus der Flüssigkeitsdüse einen Gasstrahl aus der Gasdüse in einem Kreuzungsbereich trifft. Dies erlaubt vorteilhaft eine relativ einfache und relativ robuste Konstruktion, die insbesondere relativ kostengünstig hergestellt und/oder gewartet werden kann.

Des Weiteren erlaubt die erfindungsgemäße Maschine die Ausbildung eines relativ stabilen Sprühkegels. Insbesondere kann ein Sprühkegel dabei so ausgerichtet werden, dass zu kühlende Behälterbereiche, insbesondere ein Behälterboden oder -bodenbereich von der Kühlflüssigkeit optimal beaufschlagt und gekühlt wird.

In der erfindungsgemäßen Maschine sind die Gasdüse und die Flüssigkeitsdüse relativ zueinander ausgerichtet, wobei jedoch die Gasdüse und die Flüssigkeitsdüse als separate Düsen bereitgestellt werden. Diese separate Anordnung von getrennten Düsen erlaubt es, die Parameter jeder einzelnen Düse separat und variabel zu bestimmen, auszulegen und/oder einzustellen. Insbesondere können Parameter wie Querschnittsfläche und Öffnungsweite der einzelnen Düsen jeweils unabhängig voneinander gewählt und optimiert werden. Dadurch können die Parameter für einen mittels der Gasdüse aus dem bereitgestellten Gas gebildeten Gasstrahl unabhängig von einem mittels der Flüssigkeitsdüse aus der bereitgestellten Flüssigkeit gebildeten Flüssigkeitsstrahl vorgegeben werden und umgekehrt.

Ein durch die Erfindung ermöglichtes Verfahren zum Herstellen und Befüllen von Behältern umfasst beispielsweise, dass Vorformlinge aus einem thermoplastischen Material nach einer thermischen Konditionierung in einem Blasprozess oder Streckblasprozess jeweils in einen Behälter umgeformt, und anschließend vor einem Befüllen mit einem kühlenden Nebel beaufschlagt werden, wobei zum Erzeugen des Nebels ein Gas mit einem Druck von 1 bar bis 10 bar, bevorzugt 4 bis 8 bar, weiter bevorzugt 5 bis 7 bar, sowie eine Flüssigkeit mit einem Druck von 10 mbar bis 100 mbar, bevorzugt 20 bis 75 mbar, weiter bevorzugt 30 bis 50 mbar, bereitgestellt werden.

Ein wesentlicher Aspekt dieses Verfahrens besteht darin, eine Flüssigkeit mit einem relativ niedrigeren Druck bereitzustellen und mittels eines unter einem relativ höheren Druck bereitgestellten Gases zu vernebeln. Das Verfahren führt dadurch auf vorteilhafte Weise zu einem sehr stabilen und somit gut kontrollier- und ausrichtbaren Sprühnebel oder Sprühkegel, der insbesondere aus Tropfen relativ geringer Größe besteht. Durch die geringe Tropfengröße wird dabei die kühlende Wirkung der Verdunstung besonders vorteilhaft genutzt.

Bei einem weiteren Verfahren, dass durch die Erfindung ohne bauliche Veränderung einer erfindungsgemäßen Maschine ausführbar ist, wird ein hoher Wasserdruck von beispielsweise über einem bar gewählt, um eine wesentlich vergrößerte Flüssigkeitsmenge bereitzustellen. Mit einem Gasdruck im Bereich 0,1 bis 1 bar, vorzugsweise 0,2 bis 0,8 bar, wird der Flüssigkeitsstrahl gezielt umgelenkt und aufgefächert. Die Reichweite des umgelenkten Flüssigkeitsfächers oder Sprühkegels ist dabei über den Gasdruck gezielt einstellbar, so dass beispielsweise verhindert werden kann, dass der Flüssigkeitsfächer den Mündungsbereich der zu kühlen Behälter erreicht und Flüssigkeit in die Behälter gelangt. Bei diesem Verfahren wird zwar wesentlich mehr Flüssigkeit verbraucht als bei der vorbeschriebenen Vernebelung, es wird jedoch auch eine wesentlich höhere Kühlleistung erreicht.

Im Rahmen der Erfindung können die Gasdüse und die Flüssigkeitsdüse vorteilhafterweise derart ausgebildet sein, dass neben der grundsätzlichen Anordnung der Düsen im Raum die Ausrichtung bzw. Feinjustage der Düsen möglich ist. Hierdurch können die beiden Düsen nach Bereitstellen in ihrer grundsätzlichen Anordnung insbesondere so ausgerichtet werden, dass sich Gasstrahl und Flüssigkeitsstrahl in einem Kreuzungsbereich treffen und darüber hinaus, der in dem Kreuzungsbereich gebildete Sprühkegel eine optimale Ausrichtung und Geometrie besitzt. Bei entsprechend präziser Fertigung und mechanisch stabiler Ausführung der Düsenanordnung können die Düsen jedoch auch starr zueinander ausgerichtet sein.

In einer bevorzugten Ausführungsform der erfindungsgemäßen Maschine sind die Gasdüse und die Flüssigkeitsdüse quer zueinander angeordnet, wobei die Gasdüse und die Flüssigkeitsdüse insbesondere derart angeordnet und ausgerichtet sind, dass der Gasstrahl und der Flüssigkeitsstrahl im Kreuzungsbereich unter einem, vorzugsweise vorgebbaren, Winkel von 80 bis 100 Grad, insbesondere 85 bis 95 Grad, bevorzugt 87 bis 93 Grad aufeinander treffen. In der Regel wird die Ausrichtung der Düsenöffnungen zueinander dem Winkel der Strahlen entsprechen, so lange Einflüsse auf die Geradheit der Strahlen, insbesondere durch die Gravitation, vernachlässigbar sind. Sind derartige Einflüsse nicht vernachlässigbar, beispielsweise aufgrund eines entsprechend großen Abstandes der beiden Düsen zueinander, so ist daran gedacht, diese Einflüsse bei der Ausrichtung der Düsen zueinander zu berücksichtigen, um im Kreuzungsbereich von Gasstrahl und Flüssigkeitsstrahl einen vorgegebenen Winkel der beiden Strahlen zueinander zu erreichen.

Im Rahmen der Erfindung soll unter dem Begriff quer insbesondere verstanden werden, dass jede Anordnung der Düsen in einem stumpfen Winkel, insbesondere zwischen einem Winkel von 45° und einem Winkel von 135°, meint. Entsprechendes soll für den Winkel zwischen den sich kreuzenden Strahlen gelten.

In einer bevorzugten Ausführungsform der Erfindung werden die Behälter von unten mit dem Nebel beaufschlagt, wobei die Behälter insbesondere mit dem Boden nach unten hängend gefördert werden. Besonders vorteilhaft wird dabei der Boden des Behälters oder ein Bodenbereich mit einem nach oben gerichteten Sprühnebel oder Sprühkegel angesprüht und dadurch gekühlt.

Dies erlaubt es vorteilhafterweise, einen relativ konzentrierten Kühlnebel auf den Boden des Behälters zu richten, der aufgrund vergleichsweise großer Wandstärke üblicherweise nach dem Blasprozess vergleichsweise heiß ist und deshalb einer zusätzlichen Kühlung bedarf. Entsprechend ist die Düsenanordnung bei der erfindungsgemäßen Maschine dann unterhalb einer Förderstrecke für die Behälter in der Transfereinrichtung angeordnet. Dadurch wird ermöglicht, die Behälter ohne Eingriff in vorhandene oder bekannte Transfereinrichtungen zu kühlen bzw. mit einem kühlenden Nebel zu beaufschlagen. Insbesondere werden dadurch auch die weiter oben beschriebenen Vorteile erreicht, die mit einem Beaufschlagen der Behälter mit kühlendem Nebel von unten verbunden sind.

Üblicherweise werden die Behälter in der Transfereinrichtung mit dem Boden nach unten hängend gefördert, wobei in diesem Fall die Gasdüse für einen im Wesentlichen vertikal nach oben gerichteten Gasstrahl angeordnet und ausgerichtet ist. Vorteilhafterweise ist bei dieser Konfiguration die Flüssigkeitsdüse für einen im Wesentlichen horizontal gerichteten Flüssigkeitsstrahl angeordnet und ausgerichtet.

Zudem erlaubt ein Ansprühen der Behälterböden mit Flüssigkeit in Form von Nebel von unten ein gleichzeitiges Entweichen der beim Kühlen der Behälter entstehenden Verdampfungsgase nach oben, wodurch weiterer Nebel oder Sprühnebel weitestgehend ungehindert zu der zu kühlenden Behälteroberfläche gelangen kann. Gleichzeitig trifft der Nebel nicht auf die kälteren Bereiche der Behälter, beispielsweise den Behälterseitenwänden, oder wird sogar durch die aufsteigenden Verdampfungsgase von diesen Bereichen ferngehalten. Besonders vorteilhaft verhindert das erfindungsgemäße Verfahren somit ein Benetzen von erkalteten Stellen der seitlichen Behälterwandung.

In einer bevorzugten Ausführungsform der erfindungsgemäßen Maschine ist die Düsenanordnung drehbar und/oder schwenkbar gelagert. Dadurch ist eine einfache Ausrichtung eines mittels der Düsenanordnung erzeugten Sprühnebels oder Sprühkegels zu den geförderten Behältern ermöglicht. Insbesondere kann der Sprühkegel so ausgerichtet werden kann, dass er direkt auf einen Boden oder Bodenbereich der vorbeigeförderten Behälter ausgerichtet wird.

Vorzugsweise ist die Düsenanordnung in einer quer zu einer Förderrichtung der Behälter ausgerichteten Ebene verschwenkbar und/oder verschwenkbar gelagert.

Dies ermöglicht eine besonders einfache Ausführung und insbesondere eine besonders einfache Ausrichtung der Düsenanordnung und des Sprühkegels. Insbesondere ist es ausreichend, wenn die Düsenanordnung ist lediglich einer Richtung beweglich ausgeführt bzw. schwenk- oder drehbar gelagert ist.

Bevorzugt wird bei der Erfindung ein mittels der Flüssigkeitsdüse aus der bereitgestellten Flüssigkeit gebildete Flüssigkeitsstrahl als relativ feiner und/oder geschlossener Strahl bereitgestellt. Dies ermöglicht besonders vorteilhaft eine einfache Ausrichtung des Flüssigkeitsstrahls relativ zum Gasstrahl und somit eine einfache, schnelle und nachhaltige Einstellung des Kreuzungsbereichs mit maximaler Durchdringung beider Strahlen.

In einer bevorzugten Ausführungsform der Erfindung ist der Gasstrahl im Wesentlichen vertikal nach oben gerichtet und der Flüssigkeitsstrahl ist im Wesentlichen horizontal gerichtet.

Hierdurch kann vorteilhafterweise ein relativ richtungsstabiler Sprühkegel erreicht werden, weil bezogen auf die durch den Gasstrahl vorgegebene Hauptachse des Sprühkegels keine nennenswerten queraxialen Gravitationskräfte wirken. Zudem erlaubt eine derartige Anordnung, einen Sprühkegel, der insbesondere hängend transportierte Behälter von unten direkt ansprühen kann.

In einer bevorzugten Ausführungsform der erfindungsgemäßen Maschine umfasst die Maschine eine Mehrzahl von Düsenanordnungen, die vorzugsweise mit einer gemeinsamen Gasquelle und/oder mit einer gemeinsamen Flüssigkeitsquelle verbunden sind. Dies erfolgt beispielsweise jeweils mittels einer gemeinsamen Gasleitung bzw. mittels einer gemeinsamen Flüssigkeitsleitung.

Hierdurch wird vorteilhafterweise eine Förderstrecke oder Kühlstrecke ermöglicht, bei der geförderte Behälter kontinuierlich und/oder in kurzer Aufeinanderfolge Düsenanordnungen passieren und von den bereitgestellten Kühlnebeln beaufschlagt und entsprechend gekühlt werden.

Die der Erfindung zugrundeliegende Aufgabe wird auch gelöst durch Verwendung einer Düsenanordnung nach Anspruch 6 für eine Maschine nach der vorliegenden Erfindung. Die Düsenanordnung umfasst eine mit einer Gasleitung verbindbare Gasdüse und eine mit einer Flüssigkeitsleitung verbindbare Flüssigkeitsdüse, wobei die Gasdüse und die Flüssigkeitsdüse derart zueinander angeordnet und ausgerichtet oder ausrichtbar sind, dass ein Flüssigkeitsstrahl aus der Flüssigkeitsdüse einen Gasstrahl aus der Gasdüse in einem Kreuzungsbereich trifft.

In einer bevorzugten Ausführungsform der Düsenanordnung umfasst die Düsenanordnung einen die Gasdüse und die Flüssigkeitsdüse halternden Zentralkörper.

Dadurch wird insbesondere eine konstruktiv einfache und mechanisch stabile Düsenanordnung in Form eines vormontierbaren Bauteils bereitgestellt, die gleichzeitig relativ robust ist.

Des Weiteren ist eine einfache Halterung der Düsenanordnung über den Zentralkörper ermöglicht. Insbesondere kann der Zentralkörper drehbar und/oder schwenkbar an oder in einer erfindungsgemäßen Maschine lagerbar oder halterbar sein, so dass durch Drehung und/oder Verschwenkung des Zentralkörpers die Düsenanordnung als solche ebenfalls gedreht und/oder verschwenkt werden kann, wodurch eine Ausrichtung und Justierung des Kühlnebels ermöglicht wird.

Vorzugsweise umfasst der Zentralkörper einen internen Gaskanal zum Verbinden der Gasdüse mit einem Anschluss für eine Gasleitung und/oder einen internen Flüssigkeitskanal zum Verbinden der Flüssigkeitsdüse mit einem Anschluss für eine Flüssigkeitsleitung. Dadurch ist ein schnelles und einfaches Anschließen der Düsenanordnung an eine Gasquelle bzw. eine Flüssigkeitsquelle ermöglicht.

Eine einfache Wartung der Düsenanordnung wird dadurch begünstigt, dass die Gasdüse und/oder die Flüssigkeitsdüse lösbar mit dem Zentralkörper verbunden, insbesondere gasdicht bzw. flüssigkeitsdicht verschraubt, sind. Gleichzeitig ermöglicht eine lösbare Verbindung der Gasdüse und/oder der Flüssigkeitsdüse mit dem Zentralkörper einen einfachen Austausch der Düsen und dadurch ebenfalls die Möglichkeit, die Düsen jeweils unabhängig voneinander auszuwählen. Die Anzahl unterschiedlicher Bauteile für eine große Bandbreite an möglichen Kombinationen verschiedener Gas- und Flüssigkeitsdüsen wird zudem auf ein Minimum reduziert.

In einer bevorzugten Ausführungsform der Düsenanordnung ist der Zentralkörper im Wesentlichen L-förmig ausgebildet.

Ein solcher L-förmiger Zentralkörper erlaubt vorteilhaft die Anordnung der Düsen an einem solchen Zentralkörper. Insbesondere können die Düsen vorteilhaft an der Innenseite der Schenkel eines solchen L-förmigen Zentralkörpers in einem gewünschten Winkel zueinander angeordnet werden. Der Winkel ist dabei insbesondere vorgegeben oder bestimmt durch die relative Anordnung der Innenseiten der beiden Schenkel zueinander.

Vorteilhaft kann der L-förmige Zentralkörper einstückig und damit relativ robust ausgebildet sein. Beispielsweise können die Schenkel eines einstückigen L-förmigen Zentralkörpers durch Ausschneiden erzeugt werden, wobei die Innenflächen der Schenkel in der die Düsen angeordnet werden können, durch einen Schnitt in einem entsprechenden Winkel, einen entsprechenden Winkel für die Ausrichtung der Düsen vorgeben. Zusätzlich oder alternativ können in dem Zentralkörper und insbesondere in dessen Schenkel Bohrungen, insbesondere mit einem Gewinde, zum lösbaren Verbinden der Düsen mit dem Zentralkörper vorgesehen sein. Dabei können die Winkel der Bohrungen senkrecht zur Fläche oder in einem bestimmten Winkel, ebenfalls eine Ausrichtung der Düsen in einem bestimmten Winkel zueinander ermöglichen.

Im Rahmen der Erfindung kann der Zentralkörper auch mehrstückig ausgebildet sein. Insbesondere können die Schenkel eines mehrstückig ausgebildeten L-förmigen Zentralkörpers zueinander verschwenkbar angeordnet sein, so dass ein Winkel der Düsen zueinander einstellbar ist.

Alle beschriebenen Ausführungsformen der Erfindung haben den Vorteil, dass eine effektive Kühlung von Behältern erreicht wird. Insbesondere kann ein Sprühnebel in Form eines Sprühkegels mit einer relativ kleinen Tropfengröße erreicht werden. Dabei wird vorteilhaft der Verdunstungseffekt der relativ kleinen Tropfen zur Kühlung der Behälter genutzt. Darüber hinaus wird durch alle beschriebenen Ausführungsformen der Erfindung ein relativ stabiler Sprühkegel bereitgestellt, der insbesondere nicht Wesentlich durch Luftströmungen beeinflusst wird. Weiterhin haben alle beschriebenen Ausführungsformen der Erfindung den Vorteil, dass die Düsen durch die erfindungsgemäße Düsenanordnung und/oder das erfindungsgemäße Verfahren und/oder die erfindungsgemäße Maschine relativ verstopfungsunempfindlich sind. Besonders vorteilhaft erlaubt die Düsenanordnung und/oder Maschine, dass die Gasdüse und die Flüssigkeitsdüse frei wählbar sind, wodurch die Parameter der Düsen und/oder des zu erzeugenden Kühlnebels, insbesondere die Drücke und Volumenströme den Anforderungen angepasst werden können.

Die Erfindung wird im Folgenden unter Bezugnahme auf die beiliegenden Zeichnungen weiter erläutert, aus denen sich weitere Vorteile, Ausgestaltungsformen und Merkmale der Erfindung entnehmen lassen.

Es zeigen:
- FIG 1: schematisch eine erfindungsgemäße Maschine zum Herstellen und Befüllen von Behältern;
- Fig. 2: eine perspektivische Darstellung eines Ausschnitts aus einer Kühlstrecke mit einem Transferrad und einer Mehrzahl von an Versorgungsleitungen angeschlossenen erfindungsgemäßen Düsenanordnungen gemäß einer ersten erfindungsgemäßen Ausführungsform;
- Figs. 3a und 3B: schematisch eine Düsenanordnung in perspektivischer Darstellung;
- Fig. 3c: die Düsenanordnung aus Fig. 3a und 3b mit angeschlossenen beispielhaften Versorgungsleitungen.

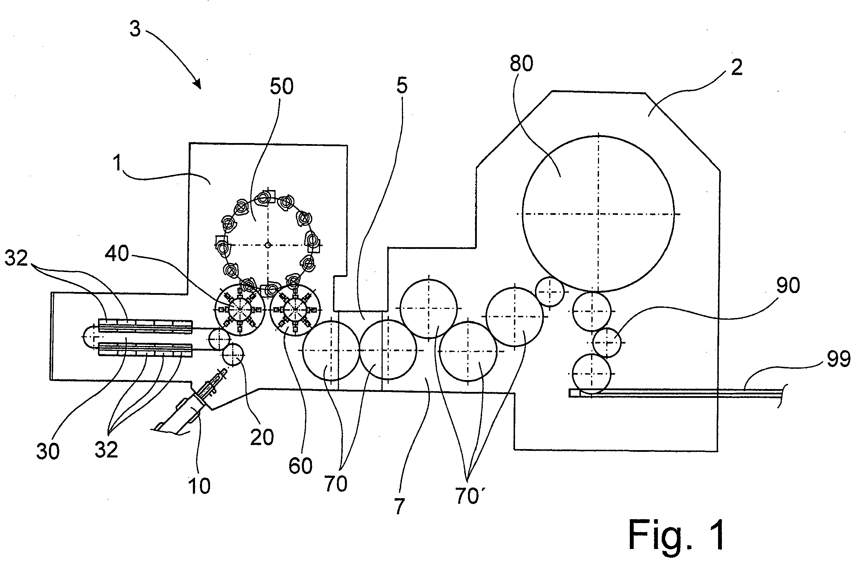

Fig. 1 zeigt schematisch eine erfindungsgemäße Maschine 3 zum Herstellen und Befüllen von Behältern. Die Maschine 3 ist ausgebildet als Blockmaschine, bei der eine Streckblasmaschine 1 und eine Füllmaschine 2 über eine Transferstrecke 7 miteinander verbunden und synchron betrieben werden.

In der Streckblasmaschine 1 werden zunächst Behälter aus jeweils einem Vorformling hergestellt. Die in der Regel spritzgegossenen Vorformlinge bestehen dabei maßgeblich aus einem thermoplastischen Kunststoff, beispielsweise Polyethylenterephthalat (PET), Polypropylen (PP) oder Polyethylennaphthalat (PEN). Grundsätzlich können auch biologisch abbaubare Kunststoffe, beispielsweise Polylactide (PLA), eingesetzt werden. Des Weiteren sind Vorformlinge mit Additiven oder Vorformlinge mit integrierten Zwischenlagen, sogenannte multi-layer, bekannt, die im Rahmen der Erfindung ebenfalls Verwendung finden können.

Die Streckblasmaschine 1 umfasst eine Zuführeinrichtung 10, in der als Schüttgut bereitgestellte Vorformlinge ausgerichtet und aufgereiht werden. Des Weiteren weist die Zuführeinrichtung 10 eie Vorschubeinrichtung, beispielsweise eine Ablaufschiene oder eine geeignete Luftförderstrecke, auf, um die ausgerichteten und aufgereihten Vorformlinge mit einer Vorschubkraft zu beaufschlagen und zu einer lückenlosen Reihe zusammenzuschieben.

Aus dieser geschlossenen Reihe werden die Vorformlinge einzeln mittels einer geeigneten Vereinzelungseinrichtung 20 entnommen, wobei die Vereinzelung durch die gesamte Maschine 3 aufrechterhalten wird. Die Vorformlinge bzw. die daraus jeweils hergestellten Behälter werden somit insbesondere in kontinuierlicher Reihe mit kontrolliertem Abstand zueinander durch die Maschine 3 transportiert und entlang dieses Transportweges mehreren Behandlungsstationen zugeführt.

Von der Vereinzelungseinrichtung 20 werden die Vorformlinge zunächst an eine Heizeinrichtung 30 übergeben. Die beispielhaft gezeigte Heizeinrichtung 30 ist als Tunnelheizung mit zwei langgestreckten Anordnungen mit Temperiermodulen 32 ausgebildet, durch die die Vorformlinge transportiert werden. Hierzu ist beispielsweise eine Vielzahl von in der Heizeinrichtung 30 umlaufenden Transportelementen vorgesehen. Hierzu sind beispielsweise Transportdorne vorgesehen, die jeweils in den Mündungsbereich eines Vorformlings einführbar und verspannbar sind, so dass die Vorformlinge mit dem Mündungsbereich nach oben orientiert an den Transportdornen hängend transportiert werden. Denkbar sind jedoch auch Ausführungsformen des Transportsystems, bei denen die Vorformlinge mit dem Mündungsbereich nach unten orientiert transportiert werden.

Als Temperiermodule 32 sind insbesondere Heizmodule zum gleichmäßigen oder selektiven Erwärmen der Vorformlinge, Kühlmodule zum Kühlen insbesondere der Oberfläche der Vorformlinge sowie Ausgleichsmodule ohne wesentliche externe thermische Einwirkung auf die Vorformlinge denkbar. In Abhängigkeit der Anforderungen des Einzelfalls werden in der Heizeinrichtung 30 verschiedene Temperiermodule 32 in geeigneter Abfolge eingesetzt, um eine gewünschte thermische Konditionierung der Vorformlinge zu erreichen.

Nach Durchlaufen der Heizeinrichtung 30 werden die thermisch konditionierten Vorformlinge mittels einer Übergabeeinrichtung 40 an ein rotierendes Blasrad 50, insbesondere an jeweils eine auf dem Blasrad 50 angeordnete Blasstation, übergeben.

Die Übergabeeinrichtung 40 umfasst beispielsweise eine Mehrzahl von Tragarmen mit zangenartig ausgebildeten Greifelementen zum Halten jeweils eines Vorformlings, wobei die Tragarme schwenkbar und/oder teleskopierbar ausgebildet sind, um einen Teilungsverzug zwischen dem üblicherweise geringen Abstand der Transportelemente in der Heizeinrichtung 30 und dem vergleichsweise großen Abstand der Blasstationen auf dem Blasrad 50 zu bewirken.

In den Blasstationen wird pro Umlauf des Blasrades 50 jeweils ein Vorformling mechanisch gereckt und unter Einwirkung von Blasdruckluft in einen Behälter umgeformt. Anschließend wird der Behälter mittels einer weiteren Übergabeeinrichtung 60 aus der Blasstation entnommen und an eine Transferstrecke 7 übergeben.

Vergleichbar zu der Übergabeeinrichtung 40 weist die Übergabeeinrichtung 60 beispielsweise schwenkbare und/oder teleskopierbare Tragarme auf, um einen Teilungsverzug zwischen dem Abstand der Blasstationen auf dem Blasrad 50 einerseits und einem Abstand von Haltelementen für die Behälter entlang der Transferstrecke 7 zu ermöglichen.

Die Transferstrecke 7 wird gebildet durch mehrere Transfersterne 70, 70', die an ihrem Umfang jeweils Halteelemente für die Behälter, beispielsweise Zangen oder vergleichbare Greifelemente, aufweisen. Der Abstand der Halteelemente auf den Transfersternen entspricht dabei vorzugsweise einem durch die anschließende Füllmaschine 2 vorgegebenen Teilungsabstand, so dass außer an der Übergabeeinrichtung 60 kein weiterer Teilungsverzug vorgesehen werden muss.

Die Streckblasmaschine 1 und die Füllmaschine 2 sind dabei durch eine Schleuse 5, die zu Beginn der Transferstrecke 7 angeordnet ist, separiert, um die trockene Atmosphäre der Streckblasmaschine 1 von der feuchten Atmosphäre in der Füllmaschine 2 zu trennen. Entsprechend wird der Bereich der erfindungsgemäßen Maschine 3 mit der Streckblasmaschine 1 üblicherweise als Trockenbereich und der Bereich mit der Füllmaschine 2 als Nassbereich bezeichnet.

Die Transferstrecke 7 besteht im gezeigten Beispiel aus insgesamt fünf Transfersternen 70, 70', wobei diese Anzahl der Transfersterne ausdrücklich als exemplarisch zu verstehen ist. Die drei in Förderrichtung der Behälter hinteren Transfersterne 70', die sich vollständig im Nassbereich der erfindungsgemäßen Maschine 3 befinden, sind als Kühlstrecke ausgebildet, in der die Behälter mit einer kühlenden Flüssigkeit beaufschlagt werden. Dadurch werden die gegebenenfalls noch warmen Behälter gekühlt und mechanisch soweit stabilisiert, dass sie beim anschließenden Befüllen keinen Schaden nehmen.

Von der Transferstrecke 7 gelangen die Behälter zu einer Füllmaschine 2. Diese umfasst eine Fülleinrichtung 80 mit umlaufenden Füllstationen, in denen jeweils ein Behälter befüllt wird.

Des Weiteren umfasst die Füllmaschine 2 eine Verschließereinrichtung 90, in der die gefüllten Behälter verschlossen werden. Anschließend werden die aus Vorformlingen gefertigten, gefüllten und verschlossenen Behälter an eine Ausgabestrecke 99 übergeben und verlassen die erfindungsgemäße Maschine 3.

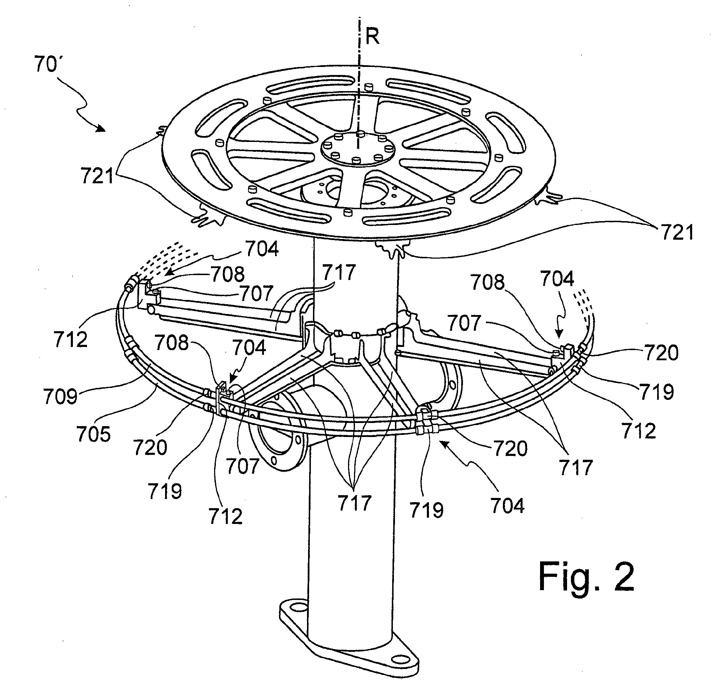

In Fig. 2 ist eine perspektivische Ansicht eines Transfersterns 70' der Kühlstrecke gezeigt. Ein derartiger Transferstern 70' ist zweckmäßig an einem Posten oder einer Säule um eine im Wesentlichen senkrechte Drehachse R drehbar gelagert und weist üblicherweise eine Mehrzahl von Halteelementen für Behälter auf, die beispielsweise als passive Zangen oder Klemmen 721 ausgebildet sind. Die Behälter hängen von den Zangen 721 gehalten mit dem Boden nach unten Orientiert an dem rotierenden Transferstern 70' und werden dabei mit einer kühlenden Flüssigkeit, beispielswiese einem Nebel oder einem Sprühkegel, beaufschlagt. Hierfür sind unterhalb des Transportweges der Behälter erfindungsgemäße Düsenanordnungen 704 vorgesehen. Die Düsenanordnungen 704 sind an zwei gemeinsame Ringleitungen 705, 709 angeschlossen, wobei eine Ringleitung 705 für ein Druckgas wie beispielsweise Druckluft und eine Ringleitung 709 für eine Flüssigkeit wie beispielsweise Wasser vorgesehen ist.

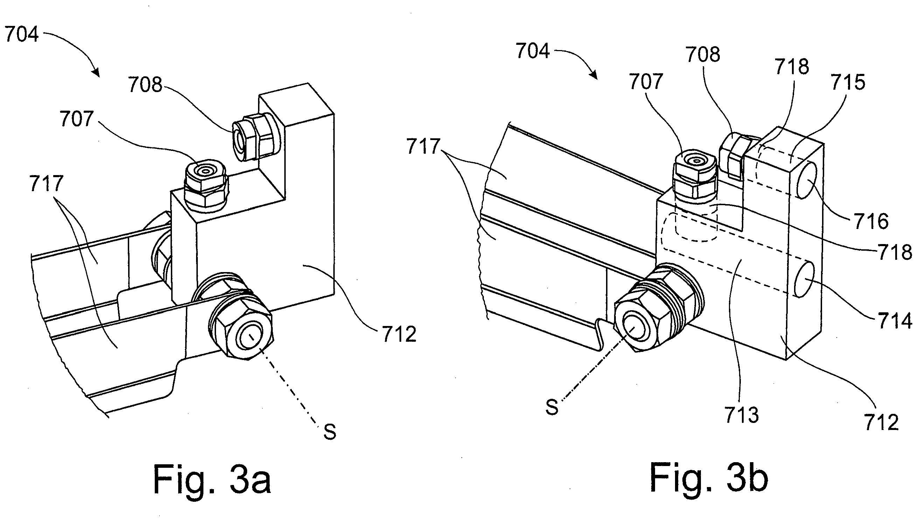

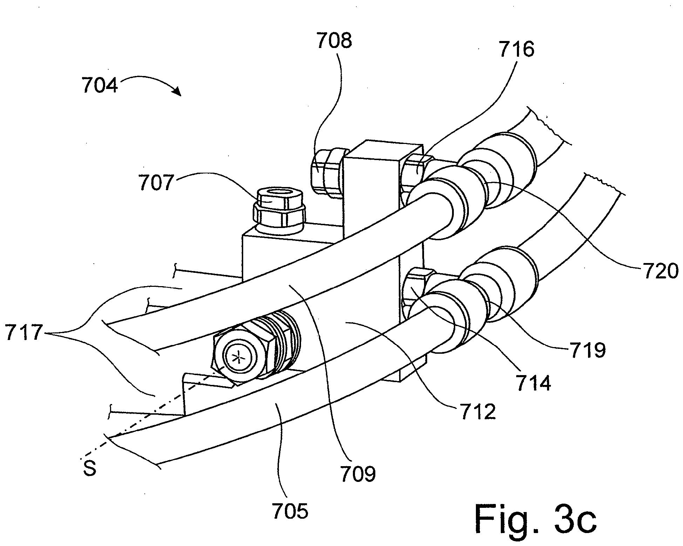

Eine Düsenanordnung 704 im Detail ist in den Fig. 3a-c dargestellt. Dabei zeigen Fig. 3a die Düsenanordnung 704 in perspektivischer Darstellung, Fig. 3b eine teilweise gebrochene Darstellung zur Veranschaulichung interner Strömungskanäle und Fig. 3c Details zum Anschluss der Düsenanordnung 704 an die Ringleitungen 705, 709.

Die Düsenanordnung 704 umfasst einen Zentralkörper 712, der um eine Schwenkachse S schwenk- oder drehbar an geeigneten Halterungen 717 des Transfersterns 70' befestigt ist. Der Zentralkörper 712 ist im Wesentlichen L-förmig mit zwei Schenkeln ausgebildet, die quer zueinander stehen. An den Innenseiten der Schenkel sind jeweils eine Düse 707, 708 angeordnet, wobei eine Düse 707 als Gasdüse und die andere Düse 708 als Flüssigkeitsdüse ausgebildet ist.

Die Schenkel des Zentralkörpers 712 sind dabei derart zueinander ausgerichtet, dass sich aus den Düsen 707, 708 austretende Gas- bzw. Flüssigkeitsstrahlen in einem Kreuzungsbereich im freien Raum zwischen den Düsen 707, 708 treffen. Der Winkel, unter dem die Strahlen aufeinandertreffen, ist dabei insbesondere abhängig von der Anordnung der beiden Schenkel des Zentralkörpers 712 zueinander.

Im gezeigten Beispiel ist der Zentralkörper 712 einstückig ausgebildet und die Anordnung der Schenkel zueinander somit unveränderlich konstruktionsbedingt festgelegt. Der Zentralkörper 712 kann im Rahmen der Erfindung jedoch auch mehrteilig, beispielsweise mit mehreren gegeneinander verschwenkbaren Schenkeln, ausgebildet sein, um so eine Variabilität der Anordnung und somit des Kreuzungswinkels der beiden Strahlen zu ermöglichen.
Die Düsen 707, 708 sind beispielsweise in geeignete Bohrungen des Zentralkörpers eingeschraubt, die hierfür entsprechende Gewindeabschnitte 718 aufweisen. Dies erlaubt einen einfachen Austausch der Düsen 707, 708 und somit eine schnelle Änderung der Düsenweite oder der Größe der Düsenöffnung. Typische Düsenweiten im Rahmen der Erfindung betragen in Abhängigkeit der im Einzelfall gewünschten Durchflussmengen an Gas bzw. Flüssigkeit etwa 0,05 bis etwa 2,5 mm. Erfolgreich getestet wurde beispielsweise die Kombination einer Gasdüse mit 1,3 mm Öffnungsweite und einer Flüssigkeitsdüse mit 0,23 mm Öffnungsweite.
Die Bohrungen des Zentralkörpers 712 dienen gleichzeitig als Gaskanal 713 zum Verbinden der Gasdüse 707 mit einem Anschluss 714 für die Gasleitung 705 bzw. als Flüssigkeitskanal 715 zum Verbinden der Flüssigkeitsdüse 708 mit einem Anschluss 716 für die Flüssigkeitsleitung 709.
- 1: Streckblasmaschine
- 2: Füllmaschine
- 3: Maschine
- 5: Schleuse
- 7: Transferstrecke
- 10: Zuführeinrichtung
- 20: Vereinzelungseinrichtung
- 30: Heizeinrichtung
- 32: Temperiermodul
- 40: Übergabeeinrichtung
- 50: Blasrad
- 70, 70': Transferrad
- 80: Fülleinrichtung
- 90: Verschließereinrichtung
- 99: Ausgabestrecke
- 704: Düsenanordnung
- 705: Gasleitung
- 707: Gasdüse
- 708: Flüssigkeitsdüse
- 709: Flüssigkeitsleitung
- 712: Zentralkörper
- 713: Gaskanal
- 714: Anschluss für eine Gasleitung
- 715: Flüssigkeitskanal
- 716: Anschluss für eine Flüssigkeitsleitung
- 717: Halterung
- 718: Gewinde
- 719: T-Verzweigung für Gasleitung
- 720: T-Verzweigung für Flüssigkeitsleitung
- 721: Zange
- S: Schwenkachse
- R: Drehachse

## Patentansprüche

1. Maschine (3) zum Herstellen und Befüllen von Behältern mit wenigstens einer Heizeinrichtung (30) zum thermischen Konditionieren von Vorformlingen aus einem thermoplastischen Material, mit wenigstens einer Blaseinrichtung (50) zum Umformen der thermisch konditionierten Vorformlinge zu jeweils einem Behälter mittels eines Blasprozesses oder eines Streckblasprozesses, mit wenigstens einer Fülleinrichtung (80) zum Befüllen der Behälter mit einem Füllgut sowie mit einer Transfereinrichtung (70, 70') zum Fördern der Behälter von der Blaseinrichtung (50) zu der Fülleinrichtung (80), wobei im Bereich der Transfereinrichtung (70, 70') wenigstens eine Düsenanordnung (704) zum Beaufschlagen der Behälter, insbesondere von Bodenbereichen der Behälter, mit einer kühlenden Flüssigkeit angeordnet ist,
**dadurch gekennzeichnet, dass**
die Düsenanordnung (704) eine mittels einer Gasleitung (705) mit einer Gasquelle (706) verbundene Gasdüse (707) sowie eine mittels einer Flüssigkeitsleitung (709) mit einer Flüssigkeitsquelle (710) verbundenen Flüssigkeitsdüse (708) aufweist, wobei die Gasdüse (707) und die Flüssigkeitsdüse (708) derart zueinander angeordnet und ausgerichtet sind, dass ein Flüssigkeitsstrahl aus der Flüssigkeitsdüse (708) einen Gasstrahl aus der Gasdüse (707) in einem Kreuzungsbereich trifft.

2. Maschine (3) nach Anspruch 1, **dadurch gekennzeichnet, dass** die Gasdüse (707) und die Flüssigkeitsdüse (708) quer zueinander angeordnet sind, wobei die Gasdüse (707) und die Flüssigkeitsdüse (708) insbesondere derart angeordnet und ausgerichtet sind, dass der Gasstrahl und der Flüssigkeitsstrahl im Kreuzungsbereich unter einem, vorzugsweise vorgebbaren, Winkel von 80 bis 100, insbesondere 85 bis 95, bevorzugt 87 bis 93 Grad aufeinander treffen.

3. Maschine (3) nach Anspruch 1 oder 2, **dadurch gekennzeichnet, dass** die Düsenanordnung (704) unterhalb einer Förderstrecke (7) für die Behälter in der Transfereinrichtung (70, 70') angeordnet ist, wobei die Behälter in der Transfereinrichtung (70, 70') insbesondere mit dem Boden nach unten hängend gefördert werden, wobei insbesondere die Gasdüse (707) für einen im Wesentlichen vertikal nach oben gerichteten Gasstrahl angeordnet und ausgerichtet ist und wobei die Flüssigkeitsdüse (708) insbesondere für einen im Wesentlichen horizontal gerichteten Flüssigkeitsstrahl angeordnet und ausgerichtet ist.

4. Maschine (3) nach einem der Ansprüche 1 bis 3, **dadurch gekennzeichnet, dass** die Düsenanordnung (704), insbesondere in einer quer zu einer Förderrichtung der Behälter ausgerichteten Ebene, drehbar und/oder schwenkbar gelagert ist.

5. Maschine (3) nach einem der Ansprüche 1 bis 4, **dadurch gekennzeichnet, dass** die Maschine (3) eine Mehrzahl von Düsenanordnungen (704) umfasst, die vorzugsweise mit einer gemeinsamen Gasquelle (706) und/oder mit einer gemeinsamen Flüssigkeitsquelle (710) verbunden sind.

6. Verwendung einer Düsenanordnung (704) mit den Merkmalen Anspruchs 1, zum Beaufschlagen von Behältern, insbesondere von Bodenbereichen der Behälter, mit einer kühlenden Flüssigkeit in einer Maschine (3) nach einem der Ansprüche 1 bis 5.

7. Verwendung einer Düsenanordnung (704) nach Anspruch 6,
**dadurch gekennzeichnet, dass** die Düsenanordnung (704) einen die Gasdüse (707) und die Flüssigkeitsdüse (708) halternden Zentralkörper (712) umfasst, wobei der Zentralkörper (712) vorzugsweise einen internen Gaskanal (713) zum Verbinden der Gasdüse (707) mit einem Anschluss (714) für eine Gasleitung (705) und/oder einen internen Flüssigkeitskanal (715) zum Verbinden der Flüssigkeitsdüse (708) mit einem Anschluss (716) für eine Flüssigkeitsleitung (709) umfasst, wobei insbesondere die Gasdüse (707) und/oder die Flüssigkeitsdüse (708) lösbar mit dem Zentralkörper (712) verbunden, insbesondere gasdicht bzw. flüssigkeitsdicht verschraubt, sind.

8. Verwendung einer Düsenanordnung (704) nach Anspruch 7,
**dadurch gekennzeichnet, dass** der Zentralkörper (712) im Wesentlichen L-förmig ausgebildet ist.

## Claims

1. A machine (3) for the production and filling of containers, having at least one heating device (30) for thermal conditioning of preforms that are made of thermoplastic material, having at least one blowing device (50) for moulding the thermally conditioned preforms to obtain one container from each of these preforms by means of a blow moulding process or a stretch blow moulding process, having at least one filling device (80) for filling the containers with fill, and having a transfer device (70, 70') for conveying the containers from the blowing device (50) to the filling device (80), wherein
at least one nozzle arrangement (704) for loading the containers, more particularly bottom regions of the containers, with a cooling fluid is arranged in the vicinity of the transfer device (70, 70'),
**characterised in that**
- the nozzle arrangement (704) has a gas nozzle (707) connected to a gas source (706) via a gas line (705) as well as a fluid nozzle (708) connected to a fluid source (710) via a fluid line (710), wherein the gas nozzle (707) and the fluid nozzle (708) are arranged and aligned with respect to each other in such manner that a fluid jet from the fluid nozzle (708) meets a gas jet from the gas nozzle (707) in an intersection area.

2. The machine (3) in accordance with Claim 1, **characterised in that** the gas nozzle (707) and the fluid nozzle (708) are arranged transversely with respect to each other, wherein the gas nozzle (707) and the fluid nozzle (708) are, in particular, arranged and aligned in such a manner that the gas jet and the fluid jet meet each other in the intersection area at a preferably predefinable angle of 80 to 100, more particularly 85 to 95, more preferably 87 to 93 degrees.

3. The machine (3) in accordance with Claim 1 or 2, **characterised in that** the nozzle arrangement (704) is arranged below a conveying section (7) for the containers in the transfer device (70, 70'), wherein the containers are conveyed in the transfer device (70, 70') particularly with their bottoms hanging down, wherein particularly the gas nozzle (707) is arranged and aligned for a gas jet that is, in essence, directed vertically upwards, and wherein the fluid nozzle (708) is, in particular, arranged and aligned for a fluid jet that is, in essence, directed horizontally.

4. The machine (3) in accordance with any one of Claims 1 to 3, **characterised in that** the nozzle arrangement (704) is rotatably and/or pivotally mounted, in particular in a plane that is aligned transversely to a conveying device of the containers.

5. The machine (3) in accordance with any one of Claims 1 to 4, **characterised in that** the machine (3) comprises a plurality of nozzle arrangements (704) which are, preferably, connected to a common gas source (706) and/or to a common fluid source (710).

6. A use of a nozzle arrangement (704) having the features of Claim 1, for loading containers, more particularly bottom regions of the containers, with a cooling fluid in a machine (3) in accordance with any one of Claims 1 to 5.

7. The use of a nozzle arrangement (704) in accordance with Claim 6, **characterised in that** the nozzle arrangement (704) comprises a central body (712) holding the gas nozzle (707) and the fluid nozzle (708), wherein the central body (712) preferably comprises an internal gas channel (713) for connecting the gas nozzle (707) to a port (714) for a gas line (705) and/or an internal fluid channel (715) for connecting the fluid nozzle (708) to a port (716) for a fluid line (709), wherein particularly the gas nozzle (707) and/or the fluid nozzle (708) is/are detachably connected, more particularly screwed, to the central body (712) in a gas-tight or fluid-tight manner, respectively.

8. The use of a nozzle arrangement (704) in accordance with Claim 7, **characterised in that** the central body (712) is, in essence, formed in the shape of an L.

## Revendications

1. Machine (3) de production et de remplissage de récipients avec au moins un dispositif de chauffage (30) pour le conditionnement thermique de préformes en un matériau thermoplastique, avec au moins un dispositif de soufflage (50) pour transformer les préformes thermiquement conditionnées en un récipient respectif au moyen d'un processus de soufflage ou d'un processus de soufflage-étirage, avec au moins un dispositif de remplissage (80) pour le remplissage des récipients avec un produit de remplissage, et avec un dispositif de transfert (70, 70') pour transporter les récipients du dispositif de soufflage (50) vers le dispositif de remplissage (80), un agencement au moins de buses (704) étant disposé dans la zone du dispositif de transfert (70, 70') pour arroser d'un liquide de refroidissement les récipients, notamment des zones de fond des récipients,
**caractérisée en ce que**
l'agencement de buses (704) présente une buse à gaz (707) branchée sur une source de gaz (706) au moyen d'une conduite de gaz (705) ainsi qu'une buse à liquide (708) branchée sur une source de liquide (710) au moyen d'une conduite de liquide (709), la buse à gaz (707) et la buse à liquide (708) étant disposées l'une par rapport à l'autre de façon à ce qu'un jet de liquide provenant de la buse à liquide (708) rencontre un jet de gaz provenant de la buse à gaz (707) dans une zone d'intersection.

2. Machine (3) selon la revendication 1, **caractérisée en ce que** la buse à gaz (707) et la buse à liquide (708) sont agencées de façon transversale l'une par rapport à l'autre, la buse à gaz (707) et la buse à liquide (708) étant notamment agencées et orientées de façon telle que, dans la zone d'intersection, le jet de gaz et le jet de liquide se rencontrent sous un angle, de préférence prédéfinissable, de 80 à 100 degrés, notamment de 85 à 95 degrés et de préférence de 87 à 93 degrés.

3. Machine (3) selon la revendication 1 ou 2, **caractérisée en ce que** l'agencement de buses (704) est disposé sous une section de transport (7) des récipients dans le dispositif de transfert (70, 70') dans lequel les récipients sont notamment transportés en position suspendue avec le fond vers le bas, la buse à gaz (707) notamment étant agencée et orientée pour produire un jet de gaz essentiellement vertical et dirigé vers le haut, et la buse à liquide (708) étant notamment agencée et orientée pour produire un jet de liquide essentiellement horizontal.

4. Machine (3) selon l'une des revendications 1 à 3, **caractérisée en ce que** l'agencement de buses (704) est logé de façon à pouvoir tourner et/ou pivoter notamment dans un plan d'orientation transversale par rapport à un direction de transport des récipients.

5. Machine (3) selon l'une des revendications 1 à 4, **caractérisée en ce que** la machine (3) comprend une pluralité d'agencements de buses (704) de préférence branchées sur une source de gaz (706) commune et/ou sur une source de liquide (710) commune.

6. Utilisation d'une agencement de buses (704) présentant les caractéristiques de la revendication 1 pour arroser d'un liquide de refroidissement des récipients, notamment des zones de fond des récipients, dans une machine (3) selon l'une des revendications 1 à 5.

7. Utilisation d'un agencement de buses (704) selon la revendication 6, **caractérisée en ce que** l'agencement de buses (704) comprend un corps central (712) qui porte la buse à gaz (707) et la buse à liquide (708), ce corps central (712) comportant de préférence un conduit de gaz interne (713) assurant la jonction entre la buse à gaz (707) et un branchement (714) d'une conduite de gaz (705) et/ou un conduit de liquide interne (715) assurant la jonction entre la buse à liquide (708) et un branchement (716) d'une conduite de liquide (709), la buse à gaz (707) et/ou la buse à liquide (708) étant notamment fixées de façon amovible au corps central (712), notamment par un raccord à vis étanche aux gaz et aux liquides.

8. Utilisation d'un agencement de buses (704) selon la revendication 7, **caractérisée en ce que** le corps central (712) est essentiellement de forme en L.
